# EUROPÄISCHE PATENTSCHRIFT

(11) **EP 3 743 193 B1**
(45) Veröffentlichungstag und Bekanntmachung des Hinweises auf die Patenterteilung: **29.12.2021**
(21) Anmeldenummer: 19730248.2
(22) Anmeldetag: 31.05.2019
(51) Int. Cl.: B01D 46/42, F16K 1/226

(54) **VERSCHLUSSVORRICHTUNG, FILTEREINHEIT FÜR EIN BARRIERESYSTEM SOWIE BARRIERESYSTEM, INSBESONDERE ISOLATOR**
CLOSURE DEVICE, FILTER UNIT FOR A BARRIER SYSTEM AND BARRIER SYSTEM, IN PARTICULAR ISOLATOR
SYSTÈME DE FERMETURE, UNITÉ FILTRANTE POUR UN SYSTÈME DE BARRIÈRE, ET SYSTÈME DE BARRIÈRE, EN PARTICULIER ISOLATEUR

(30) Priorität: 07.06.2018 DE 102018113609
(43) Veröffentlichungstag der Anmeldung: 02.12.2020
(73) Patentinhaber: Metall + Plastic GmbH, 78315 Radolfzell (DE)
(72) Erfinder: BERTSCHE, Thomas, 78239 Rielasingen-Worblingen (DE); KASSNER, Thomas, 78315 Radolfzell (DE)
(74) Vertreter: Patent- und Rechtsanwälte Behrmann Wagner PartG mbB
(86) Internationale Anmeldenummer: PCT/EP2019/064185
(87) Internationale Veröffentlichungsnummer: WO 2019/233892

(56) Entgegenhaltungen:
- WO-A1-91/16963
- DE-A1- 2 923 885
- DE-A1- 3 744 548
- DE-A1- 10 060 004
- DE-A1- 10 250 774
- DE-A1- 19 542 568
- DE-U1-202004 000 309
- FR-A1- 2 462 630
- US-A- 4 759 781
- US-A- 4 905 966

## Beschreibung

Die Erfindung betrifft eine Verschlussvorrichtung für eine Filtereinheit zum gemeinsamen lösbaren Einsetzen in einen Rückluft- oder Abluftkanal eines Barrieresystems, umfassend einen Grundkörper, eine von einer Ringdichtung umfangsseitig begrenzbare Öffnung in dem Grundkörper, einen Deckel, der zwischen einer Öffnungsstellung, in welcher die Öffnung geöffnet ist, und einer Schließstellung, in welcher er dichtend an der Ringdichtung anliegt zum wahlweisen Öffnen und Schließen der Öffnung verstellbar ist und welcher von einer gedachten Längsachse durchsetzt ist, wobei der Deckel mittels mindestens eines von einer Schwenkachse durchgriffenen Drehgelenks schwenkbar an dem Grundkörper angelenkt ist.

Zudem betrifft die Erfindung eine Filtereinheit zum lösbaren Einsetzen in einen Rückluft- oder Abluftkanal eines Barrieresystems.

Ferner betrifft die Erfindung ein Barrieresystem, insbesondere einen Isolator, bevorzugt für pharmatechnische Anwendungen, mit einem Bearbeitungsraum und einem Rückluft- oder Abluftkanal sowie mindestens einer lösbar in den Rückluft- oder Abluftkanal eingesetzten, nach dem Konzept der Erfindung ausgebildeten Filtereinheit.

Austauschbare Filtereinheiten für pharmatechnische Barrieresysteme sind bekannt. Eine solche Filtereinheit ist beispielsweise in der DE 20 2010 017 347 A1 beschrieben. Bei der bekannten Lösung wird eine dem Barrieresystem zugewandte Öffnung mittels eines translatorisch vestellbaren Deckels geöffnet oder verschlossen, wobei zum translatorischen Verstellen des Deckels ein die Filtereinheit durchsetzender Spindeltrieb vorgesehen ist, der einen zentrischen Teil des von Filtermitteln der Filtereinheit umschlossenen Innenraums beansprucht. Nachteilig bei dem bekannten System ist, dass eine essentielle gleichmäßige Luftverteilung im Innenraum durch den Spindeltrieb behindert wird.

Eine alternative Filtereinheit ist in der EP 2 666 532 B1 beschrieben. Die bekannte Filtereinheit zeichnet sich durch einen Kolben und eine Kolbenaufnahme im Innenraum der Filtereinheit aus. Bei der bekannten Lösung wird ebenfalls eine gleichmäßige Luftverteilung durch die Einbauten im Innenraum nachteilig beeinflusst.

Aus der WO 2017/088075 A1 ist eine weitere alternative Filtereinheit bekannt, die sich dadurch auszeichnet, dass dem aus der DE 20 2010 017 347 A1 bekannten Spindeltrieb lösbar ein Antriebsmotor zugeordnet ist, der von außen auf den Spindeltrieb aufsetzbar ist. Es bestehen auch hier die im Zusammenhang mit der DE 20 2010 017 347 A 1 beschriebenen Nachteile.

Aus der Praxis ist auch eine Filtereinheit bekannt, welche eine Verschlussvorrichtung mit einer U-förmigen Ringdichtung umfasst, die eine Öffnung umfangsseitig begrenzt. Die Öffnung ist wahlweise öffenbar oder verschließbar mittels eines Deckels, der um eine Schwenkachse verschwenkbar ist. Die Schwenkachse durchgreift einen Verschlussabschnitt des Deckels, also derjenigen Abschnitt, der die Öffnung verschließt, in der Vertikallängsmittelebene des Deckels. Die Vertikallängsmittelebene ist so angeordnet, dass sowohl das geometrische Zentrum des Verschlussabschnitts als auch der Normalenvektor des Verschlussabschnitts in Schließstellung des Deckels in der Vertikallängsmittelebene liegt. Mit anderen Worten verläuft die Schwenkachse mittig durch den kreisförmig konturierten Deckel, fällt also zusammen mit oder ist parallel angeordnet zu einer Durchmesserlinie der Öffnung. Die Rotationswellen des Deckels liegen sich diametral gegenüber bzw. die Schwenkachse des Deckels durchläuft dessen Zentrum. Problematisch ist jedoch, dass der Deckel in seiner Offenstellung an der Ringdichtung anliegt und bei Verstellung in seine Schließstellung die Ringdichtung aus ihrer Befestigung herauswalken bzw. herausdrücken kann. Es entstehen hohe Reibungskräfte oder Reibungskräfte für die gesamte Verschwenkdauer zwischen der Ringdichtung und dem Deckel. Daher sind auch hohe Momente nötig, um den Deckel zu verstellen.

Schließlich sind aus dem Stand der Technik auch noch die Entgegenhaltungen CN204522561U sowie die US 4 759 781 A bekannt.

Ausgehend von dem vorgenannten Stand der Technik liegt der Erfindung die Aufgabe zugrunde eine einfach aufgebaute Filtereinheit, insbesondere Filterpatrone, zum lösbaren Einsetzen in einen Rückluft- oder Abluftkanal eines Barrieresystems anzugeben, bei welcher ein herauswalken der Ringdichtung sicher verhindert ist.

Ferner besteht die Aufgabe darin ein Barrieresystem, insbesondere einen Isolator, bevorzugt für pharmatechnische Anwendungen mit einer solchen Filtereinheit anzugeben.

Diese Aufgabe wird hinsichtlich der Verschlussvorrichtung mit den Merkmalen des Anspruchs 1 gelöst.

### GEAENDERTES BLATT

Vorteilhafte Weiterbildungen der Erfindung sind in den Unteransprüchen angegeben.

Zur Vermeidung von Wiederholungen sollen vorrichtungsgemäß offenbarte Merkmale auch als verfahrensgemäß offenbart gelten und beanspruchbar sein. Ebenso sollen verfahrensgemäß offenbarte Merkmale auch als vorrichtungsgemäß offenbart gelten und beanspruchbar sein.

Der Erfindung liegt der Gedanke zugrunde, möglichst geringe Reibungskräfte oder Reibungskräfte lediglich für sehr kurze Zeit zwischen der Ringdichtung und dem Deckel bei dessen Verstellbewegung zwischen der Offenstellung und der Schließstellung entstehen zu lassen. Es ist also erfindungsgemäß eine Doppelexzentrizität vorgesehen, welche zu einer erheblichen Reduzierung sowohl der Reibungskrafthöhe als auch der Reibungskraftdauer führt. Die Doppelexzentrizität führt nämlich dazu, dass der Deckel bzw. dessen Verschlussabschnitt nur für einen sehr kurzen Zeitraum bzw. nur für einen sehr geringen Verschwenkungsbereich von etwa 0° bis 10°, bezogen auf die Schließstellung, überhaupt in Kontakt mit der Ringdichtung kommt. Die beiden Exzentrizitäten führen auch dazu, dass der Deckel nicht mit einer ausschließlich rotatorischen Verstellbewegung verstellt wird, sondern die hauptsächlich rotatorische Verstellbewegung einen translatorischen Anteil umfasst, der dazu führt, dass der Deckel eine geringere Walkungswirkung auf die Ringdichtung ausübt. Zudem führt die Doppelexzentrizität dazu, dass der Deckel in seiner Offenstellung beispielsweise bei einem Öffnungswinkel von 90° ungleichmäßig aus der Öffnung herausragt. Während ein großer Teil des Deckels aus einer Seite der Öffnung ragt, kann gleichzeitig lediglich ein kleiner Teil des Deckels aus der anderen Seite der Öffnung ragen. Dadurch können Bauraum und Transportkosten eingespart werden.

Die Verschlussabschnittsebene ist definiert durch den Verschlussabschnitt in der Schließstellung des Deckels, wobei sie auf Höhe des Kontaktes zwischen dem Verschlussabschnitt und der Ringdichtung liegt.

Bei einer bevorzugten Ausführungsform der Verschlussvorrichtung nach der Erfindung ist der Deckel entlang der Schwenkachse an zwei sich gegenüberliegenden Drehgelenken, bevorzugt an mindestens einer, weiter bevorzugt an zwei mit der Schwenkachse zusammenfallenden Wellenabschnitten, verschwenkbar gelagert ist. Die Drehgelenke können Gleit- oder Wälzlager aufweisen.

Bei einer weiteren bevorzugten Ausführungsform der Verschlussvorrichtung nach der Erfindung weist der Grundkörper einen Flansch auf, an welchem die Ringdichtung angeordnet ist und der Flansch und/oder die Ringdichtung derart ausgebildet ist/sind, dass in Öffnungsstellung des Deckels mindestens ein Hohlraum zwischen dem Flansch und der Ringdichtung ausgebildet ist. Die Dichtung kann somit bei daran anliegendem Deckel in den Hohlraum gedrückt werden.

Gemäß einer weiteren bevorzugten Ausführungsform der Verschlussvorrichtung nach der Erfindung ist ein Hohlraum dem Deckel zugewandt und/oder ein Hohlraum so angeordnet, dass er einem an die Verschlussvorrichtung anschließbaren Barrieresystem zugewandt ist. Der dem Deckel zugewandte Hohlraum führt dazu, dass ein Toleranzausgleich erfolgen kann und entstehende Reibungskräfte zwischen der Dichtung und dem Deckel weiter reduziert werden können. Der dem Barrieresystem zugewandte Hohlraum führt ebenfalls dazu, dass nur geringe Kräfte nötig sind, um die Verschlussvorrichtung mit dem Barrieresystem zu verbinden, bevorzugt dieses dort über einen Bajonettverschluss einzudrehen.

Gemäß einer weiteren bevorzugten Ausführungsform der Verschlussvorrichtung nach der Erfindung weist die Ringdichtung einen weitgehend kreisförmigen oder einen C-förmigen Querschnitt auf. Bei einer Dichtung mit kreisförmigem Querschnitt kann es sich um einen handelsüblichen O-Ring handeln, welcher kostengünstig ist. Die Dichtung mit C-förmigem Querschnitt bietet die Möglichkeit der Ausbildung des Hohlraums.

Es ist gemäß einer weiteren bevorzugten Ausführungsform der Verschlussvorrichtung nach der Erfindung denkbar, dass die Ringdichtung zumindest abschnittsweise in Richtung Drehachse konisch aufweitend ausgebildet ist. Dadurch können entstehende Reibungskräfte zwischen der Dichtung und dem Deckel weiter reduziert werden und eine hochdichte Schließstellung gewährleistet werden.

Die erfindungsgemäße Filtereinheit eröffnet die Möglichkeit, den Innenraum auf der der Öffnung gegenüberliegenden Seite von einem durchbruchfreien Gehäuseabschnitt der Filtereinheit sicher zu verschließen, was bevorzugt ist, um ein Austragen von ggf. toxischen Partikeln durch abgedichtete Durchbrüche, wie diese bei der im Stand der Technik beschriebenen Spindellösung möglich sind, sicher zu vermeiden. Ein Leck kann auch nicht durch eine herausgewalkte Dichtung entstehen.

Die Erfindung umfasst auch ein Barrieresystem, insbesondere einen Isolator, bevorzugt für pharmatechnische Anwendungen, welcher weiter bevorzugt ausgebildet ist, wie eingangs beschrieben und insofern insbesondere bevorzugt Dekontaminationsmittel zum Dekontaminieren des Bearbeitungsraums, bevorzugt Wasserstoffperoxid aufweist. Das erfindungsgemäße Barrieresystem zeichnet sich aus durch eine lösbar in den Rückluft- oder Abluftkanal eingesetzte, nach dem Konzept der Erfindung ausgebildete Filtereinheit oder bevorzugt mehrerer solcher Filtereinheiten.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1: ein Ausführungsbeispiel einer nach dem Konzept der Erfindung ausgebildeten, an einem nur ausschnittsweise dargestellten Barrieresystem festgelegten Filtereinheit zur Verstellung der Klappe in einer Schnittansicht entlang einer Linie I-I nach Fig. 6,
- Fig. 2: eine perspektivische Draufsicht auf eine erfindungsgemäße Verschlussvorrichtung nach Fig. 1 in Schließstellung,
- Fig. 3: eine perspektivische Unteransicht auf eine erfindungsgemäße Verschlussvorrichtung nach Fig. 1 in Schließstellung,
- Fig. 4: eine perspektivische Draufsicht auf eine erfindungsgemäße Verschlussvorrichtung nach Fig. 1 in Öffnungsstellung,
- Fig. 5: eine perspektivische Unteransicht auf eine erfindungsgemäße Verschlussvorrichtung nach Fig. 1 in Öffnungsstellung,
- Fig. 6: eine Draufsicht auf eine erfindungsgemäße Verschlussvorrichtung gemäß Fig. 1 in Schließstellung, und
- Fig. 7: eine Detailansicht des Ausschnitts VII nach Fig. 1.

In den Figuren sind gleiche Elemente und Elemente mit der gleichen Funktion mit den gleichen Bezugszeichen gekennzeichnet.

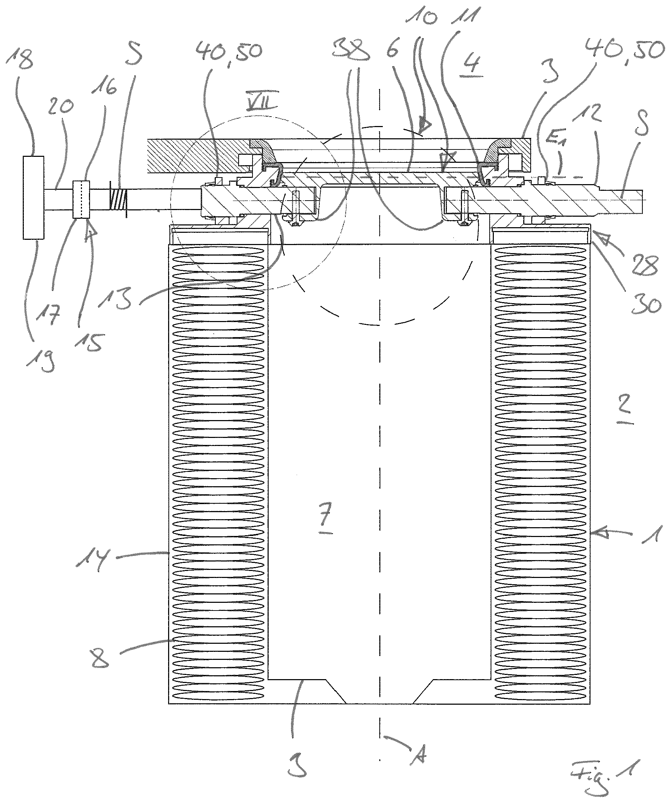

In Fig. 1 ist schematisch eine als Filterpatrone ausgebildete Filtereinheit 1 gezeigt, eingesetzt in einen Rückluft- oder Abluftkanal 2 eines bevorzugt als pharmatechnischer Isolator ausgebildeten Barrieresystems 3, umfassend einen Bearbeitungsraum 4. Die Filtereinheit 1 hat einen im Wesentlichen zylindrischen Aufbau und ist in Fig. 1 in einer Längsschnittansicht gezeigt. Zu erkennen ist eine zentrische, sich entlang der Längserstreckung der Filtereinheit 1 erstreckende Längsachse A, vorliegend in Form der Längsmittelachse, die mit einer Einsetzrichtung bzw. -achse zum Einsetzen der Filtereinheit in die gezeigte Position am Barrieresystem 3 zusammenfällt. Die Längsachse A durchsetzt eine stirnseitige Öffnung 6 der Filtereinheit 1 durch die (bei geöffneter Öffnung 6) Gas, vorliegend Luft axial aus dem Bearbeitungsraum 4 in einen Innenraum 7 der Filtereinheit 1 einströmen kann, ausgehend von dem das Gas in radialer Richtung nach außen in hohlzylindrisch konturierte Filtermittel 8 einströmt, aus denen das Gas dann (gefiltert) in radialer Richtung nach außen in den Rückluft- oder Abluftkanal 2 wieder ausströmt. Auf der der Öffnung 6 axial gegenüberliegenden Seite ist der Innenraum der Filtereinheit 1 von einem Gehäuseabschnitt 9 durchbrechungsfrei verschlossen.

Die Öffnung 6 ist in einer einen Grundkörper 30 aufweisenden Verschlussvorrichtung 28 ausgebildet, die an dem dem Gehäuseabschnitt 9 gegenüberliegenden Ende der Filtereinheit 1 angeordnet ist. Die Öffnung 6 ist umfangsseitig von einer Ringdichtung 11 begrenzt bzw. die Ringdichtung 11 ist an einem Flansch 32 angeordnet.

Zum Öffnen und Schließen der Öffnung 6 und damit des Innenraums 7 ist ein als Klappe ausgebildeter und angeordneter Deckel 10 vorgesehen, der zwischen der gezeigten Schließstellung und einer strichliert angedeuteten Öffnungsstellung um eine sich bevorzugt senkrecht zur Längsachse A erstreckenden Schwenkachse S verschwenkbar ist.

Zu erkennen ist, dass der Deckel 10 außerhalb der bevorzugt elastomeren Ringdichtung 11 am Öffnungsrand der Öffnung 6 verschwenkbar ist, die in Schließstellung einen dichten Verschluss sicherstellt. Gleichzeitig liegt diese Ringdichtung 11, oder alternativ eine zusätzliche Ringdichtung dichtend axial am Barrieresystem 3 an. Eine ausreichende Dichtungspressung wird durch eine entsprechende Axialkraftbeaufschlagung der Filtereinheit 1 entlang der Längsachse A hin zum Barrieresystem 3 sichergestellt, wobei diese Axialkraft beispielsweise durch einen Rastmechanismus, und/oder Verschlussschrauben und/oder einen Bajonettverschluss od.dgl. Fixier- und/oder Positioniermittel in an sich bekannter Weise aufbringbar ist.

Entlang der Schwenkachse S sind dem Deckel 10 fest mit dem Deckel 10 verbundene, sich gegenüberliegende Wellenabschnitte 12, 13 zugeordnet, über die der Deckel 10 gegenüber einem Gehäuse 14 der Filtereinheit verschwenkbar an Lagern 50 gelagert ist. Endseitig an dem in der Zeichnungsebene linken Wellenabschnitt 13 befindet sich eine lediglich schematisch als Black-Box dargestellte lösbare Kupplung 15 zur Drehmomentübertragung. Diese Kupplung 15 setzt sich zusammen aus einem wellenabschnittsseitigen Kupplungsabtriebsabschnitt 16 und einem drehmomentübertragend mit diesem verbundenen, barrieresystemseitigen Kupplungsantriebsabschnitt 17 einer barrieresystemseitigen und dort gehäusefesten Antriebseinrichtung 18, vorliegend einer automatischen Antriebseinrichtung 18 mit Elektromotor 19. Durch Rotieren des Elektromotors 19 wird über eine entsprechende Welle 20 der Kupplungsantriebabschnitt 17 verschwenkt und hierdurch wiederum über die drehmomentübertragende Kupplung der Kupplungsabtriebsabschnitt 16 und somit der Wellenabschnitt 13 mit Deckel 10.

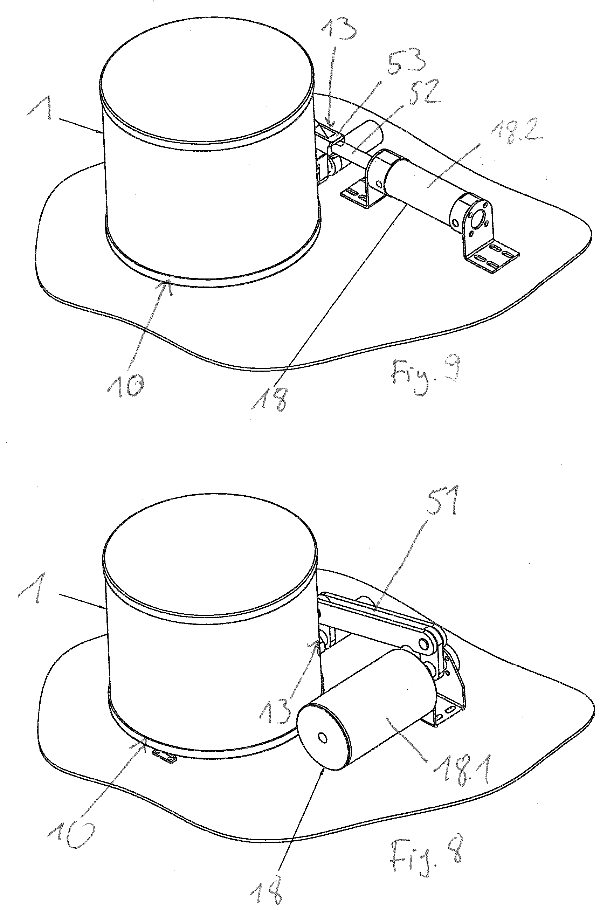

Alternative Lösungskonzepte zur Drehmomentsübertragung zwischen Antriebseinrichtungen 18 und dem Wellenabschnitt 13 und damit dem Deckel 10 sind in den Figuren 8 und 9 dargestellt und in der entsprechenden Beschreibung im Detail erörtert. Die direkte Übertragung eines Drehmoments von einer Antriebsvorrichtung 18 auf einen Antriebszapfen oder Wellenabschnitt 13 kann jedoch ebenfalls vorteilhaft vorgesehen sein.

Anstatt des Wellenabschnitts 12 kann beispielsweise dort auch ein axialer in den Deckel 10 hineinragender Lagerzapfen vorgesehen sein. Selbstverständlich ist auch ganz allgemein eine Lagerung der Klappe bzw. des Deckels 10 auf andere Weise möglich, beispielsweise über einen oder zwei entlang der Schwenkachse S in die Klappe hineinragenden, Lagerzapfen.

Der Elektromotor 19 ist bevorzugt derart ansteuerbar, dass der Deckel 10 einen definierten Öffnungsschwenkwinkel einnimmt, der bevorzugt einstellbar ist. Denkbar ist es, diese Öffnungsstellung über einen Endschalter vorzugeben, der bevorzugt in unterschiedlichen Positionen, insbesondere des Barrieresystem zur Einstellung des gewünschten Öffnungswinkels festlegbar ist.

Mit dem Bezugszeichen 5 sind eine Torsionfeder umfassende Schließfedermittel 5 gekennzeichnet, gegen deren Federkraft der Deckel 10 aus der Verschlussschwenkposition in eine Öffnungsschwenkposition verschwenkbar ist.

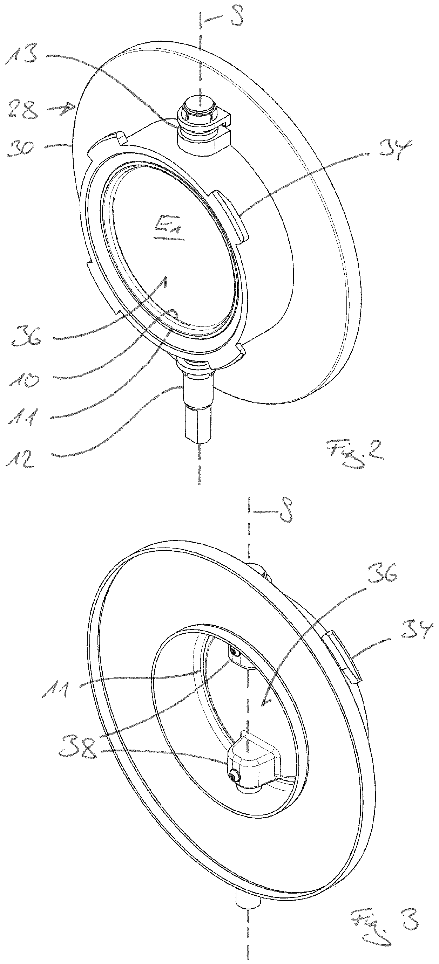

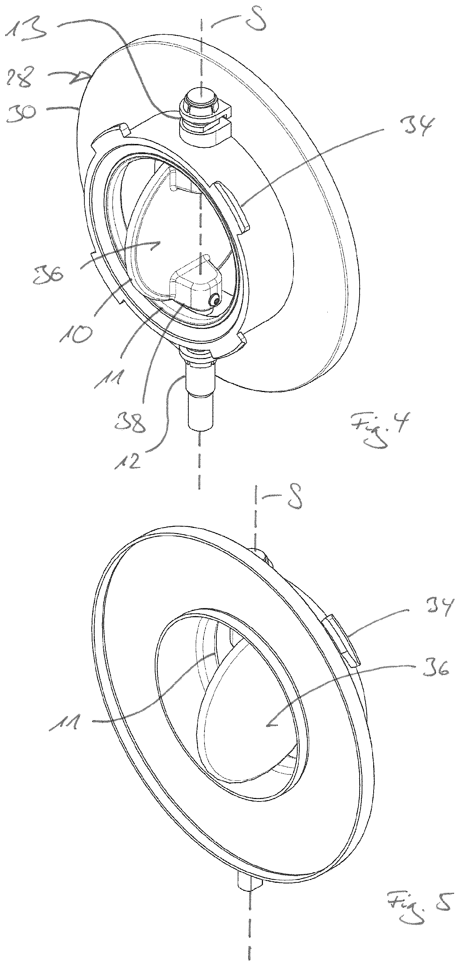

Die Figuren 2 bis 5 zeigen die Verschlussvorrichtung 28 in Alleinstellung mit einem Deckel 10 in Schließstellung (Fig. 2 und 3) und einem demgegenüber um einen Öffnungsschwenkwinkel von 90° in eine Öffnungsstellung verstellten Deckel 10 (Fig. 4 und 5). Die Öffnungsstellung kann jedoch auch einen geringeren Öffnungswinkel aufweisen, wobei bei einem Winkel von 0° die Schließstellung vorliegt. Es ist zu erkennen, dass der Grundkörper 30 an seinem dem Barrieresystem 3 zuwendbaren Ende vier gleichmäßig beabstandete Verschlussrasten 34 eines Bajonettverschluss aufweist zur lösbaren Fixierung am Barrieresystem 3.

Der Deckel 10 weist einen bevorzugt kreisrunden Verschlussabschnitt 36 auf, welcher als derjenigen Abschnitt gilt, der die Öffnung 6 verschließt. Der Verschlussabschnitt 36 liegt in Schließstellung dichtend an der Ringdichtung 11 an. Der Verschlussabschnitt 36 ist getragen von zwei mit dem Verschlussabschnitt 36 drehfest verbundenen sich gegenüberliegenden Basisabschnitten 38. Die Basisabschnitten 38 bilden zusammen mit den Wellenabschnitten 12 und 13 jeweils ein Drehgelenk 40 aus, welche von der Schwenkachse S durchgriffen sind.

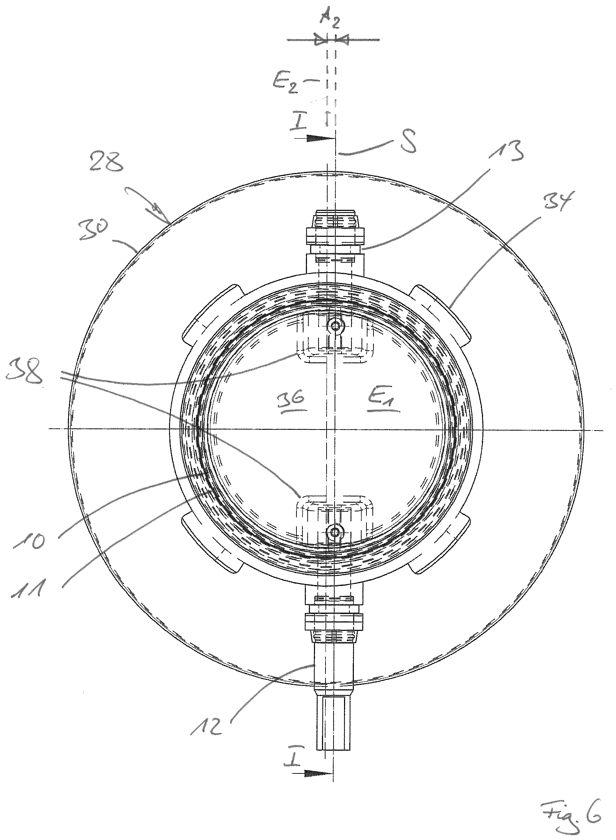

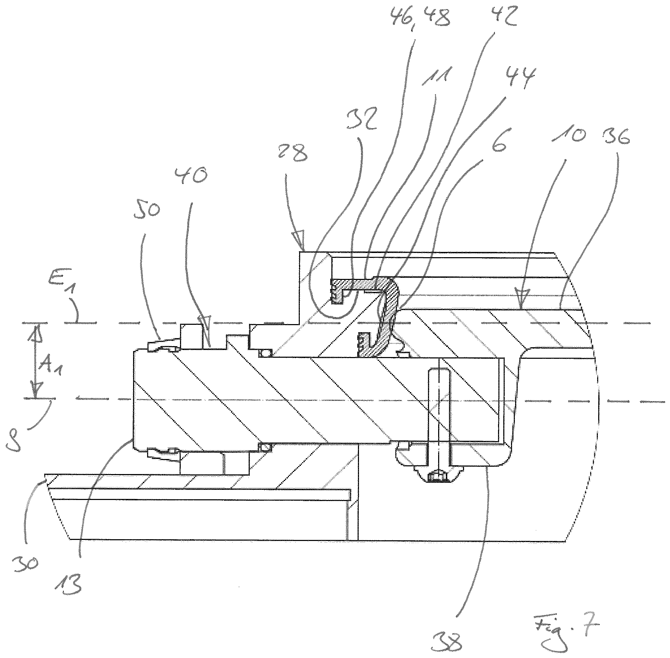

Eine erste Exzentrizität ist insbesondere in den Fig. 1 und 7 erkennbar, da die Schwenkachse S nicht mit einer Verschlussabschnittsebene E₁ zusammenfällt, in welcher der Verschlussabschnitt 36 liegt. Vielmehr ist zwischen der Verschlussabschnittsebene E₁ und der Schwenkachse S ein Abstand A₁ vorgesehen. Die Verschlussabschnittsebene E₁ und die Schwenkachse S verlaufen echt parallel zueinander. Eine zweite Exzentrizität zeigt sich in Zusammenschau der Fig. 4 und 5 sowie in Fig. 6. Die Schwenkachse S ist nämlich mit einem Abstand A₂ zu einer Vertikallängsmittelebene E₂ angeordnet, die den Deckel (10) in dessen Schließstellung vertikal mittig durchgreift. Die Vertikallängsmittelebene E₂ und die Schwenkachse S verlaufen echt parallel zueinander. Daraus resultiert, dass der Deckel 10 in Fig. 4 erheblich kürzer aus der Öffnung 6 herausragt als in Fig. 5. Bei Anordnung nach Fig. 1 in einem Gehäuse 14 ragt somit in Großteil des Deckels 10 in den Innenraum 7 hinein, während lediglich ein Kleinteil des Deckels 10 aus der barrieresystemseitigen Seite der Öffnung 6 ragt.

Die Fig. 6 und 7 verdeutlichen die erfindungsgemäße Doppelexzentrizität. Die Verschlussabschnittsebene E₁ ist definiert durch den Verschlussabschnitt 36 in dessen Schließstellung. Die Vertikallängsmittelebene E₂ durchgreift den Deckel 10 in dessen Schließstellung vertikal mittig. Die erste Exzentrizität ergibt sich durch den Abstand A₁ zwischen der Schwenkachse S und der Verschlussabschnittsebene E₁, wie Fig. 7 zeigt. Die zweite Exzentrizität ergibt sich durch den Abstand A₂ zwischen der Schwenkachse S und der Vertikallängsmittelebene E₂, wie Fig. 6 zeigt.

Die Fig. 7 zeigt insbesondere die Ringdichtung 11, welche an dem Flansch 32 angeordnet ist. Ein erster Hohlraum 42 ist an der barrieresystemseitigen Seite des Flansches 32 und ein zweiter Hohlraum 44 ist an der dem Deckel 10 zugewandten Seite des Flansches 32 angeordnet. Die Hohlräume 42 und 44 sind zwischen dem Flansch 32 und der Ringdichtung 11 angeordnet. Die Ringdichtung 11 weist einen annähernd C-förmigen Querschnitt auf und hintergreift mit zwei Sockelabschnitten 46 Befestigungsnuten 48 am Flansch 32.

Insbesondere Fig. 7 zeigt, dass die Ringdichtung 11 zumindest abschnittsweise in Richtung Drehachse S konisch aufweitend ausgebildet ist. Dadurch kann der Deckel 10 leicht in die an der Ringdichtung 11 anliegende Schließstellung gebracht werden.

Nicht dargestellt ist ein Sicherungsmittel, welches vorzugsweise irreversibel den Deckel 10 in seiner Schließstellung sichert. Das Sicherungsmittel ist beispielsweise auf zumindest einen der Wellenabschnitte 12, 13 aufschiebbar und dort verrastbar, um eine Rotation des Deckels 10 zu verhindern.

Die Fig. 8 zeigt einen Ausschnitt aus einem erfindungsgemäßen Barrieresystem umfassend eine Filtereinheit 1 und eine Antriebseinrichtung 18 zur Übertragung von Drehmomenten, von der Antriebseinrichtung 18 auf den Deckel 10, bevorzugt über einen Wellenabschnitt 13. Im Beispiel der Fig. 8 ist die Antriebseinrichtung als eine elektrische oder pneumatische Dreh-Antriebsantriebseinrichtung 18.1 ausgestaltet, die eine Drehbewegung erzeugt, die über eine Gelenkverbindung, beispielsweise eine Kniehebel auf den Wellenabschnitt 13 übertragen wird. Wie bereits im Bezug auf Figur 1 beschrieben kann eine lösbare Kopplung oder Kupplung zwischen der Antriebseinrichtung 18.1, insbesondere der Gelenkverbindung 51 und dem Wellenabschnitt 13 vorgesehen sein, so dass die Filtereinheit 1 oder der Wellenabschnitt 13 der Filtereinheit von der Antriebsvorrichtung 18, 18.1 gelöst werden kann, um eine Entnahme und/oder einen Wechsel der Filtereinheit zu erlauben.

Es kann ebenfalls vorgesehen sein, dass das Barrieresystem, insbesondere die Filtereinheit 1 einen oder zwei Sensoreinrichtungen aufweist, welche die Stellung des Deckels 10, insbesondere die Endlagen des Deckels 10 in einer vollständig geöffneten und in einer vollständig geschlossenen Position erfassen und bevorzugt an eine Steuereinheit des Barrieresystems kommunizieren.

Die Antriebsvorrichtung 18 kann so ausgestaltet sein, dass bei Erreichung einer vollständig geöffneten Position des Deckels 10 oder einer offenen Endlage des Deckels 10 ein Anschlag erreicht wird, so dass die Antriebsvorrichtung zum Erreichen der offenen oder geöffneten Endlage des Deckels 10 auf Block oder auf Anschlag fährt. Es kann vorgesehen sein, zumindest eine Sensorvorrichtung so auszuführen, dass die Betriebsparameter der Antriebsvorrichtung, beispielsweise Stromstärke, Spannung, pneumatischer Druck oder dergleichen erfasst und als mittelbare Messgrößen zur Erfassung zumindest einer Endlage des Deckels 10 herangezogen werden.

Eine alternative Ausgestaltung der Antriebsvorrichtung 18 ist in der Fig. 9 gezeigt, in der die Linear-Antriebsvorrichtung 18.2 als pneumatischer Linearantrieb ausgestaltet ist, dem eine Kolbenstange 52 zugeordnet ist, die die Linearbewegung der Antriebsvorrichtung 18.2 in Verbindung mit einer Anlenkvorrichtung 53 in eine Rotationsbewegung oder ein Drehmoment auf den Wellenabschnitt 13 übersetzt. Ansonsten kann auch hier ein mechanischer Anschlag realisiert sein, der die Bewegung der Antriebsvorrichtung begrenzt, spätestens wenn der Deckel 10 die vollständig geöffnete und/oder die vollständig geschlossene Position oder Stellung erreicht hat. Ebenfalls kann für die Anlenkvorrichtung 53 eine lösbare Kopplung oder Kupplung zu dem Wellenabschnitt 13 vorgesehen sein.

### Bezugszeichen

- 1: Filtereinheit
- 2: Rückluft- oder Abluftkanal
- 3: Barrieresystem
- 4: Bearbeitungsraum
- 5: Schließfedermittel
- 6: Öffnung
- 7: Innenraum
- 8: Filtermittel
- 9: Gehäuseabschnitt
- 10: Deckel
- 11: Ringdichtung
- 12: Wellenabschnitt
- 13: Wellenabschnitt
- 14: Gehäuse
- 15: Kupplung
- 16: Kupplungsabtriebsabschnitt
- 17: Kupplungsantriebsabschnitt
- 18: Antriebseinrichtung
- 18.1: Dreh-Antriebsantriebseinrichtung
- 18.2: Linear-Antriebsvorrichtung
- 19: Elektromotor
- 20: Welle
- 21: Verstellmechanismus
- 22: Schwenkhebel
- 23: Anschlag
- 24: Teleskopabschnitt
- 25: Einsetzrichtung
- 26: Winkelgetriebe
- 28: Verschlussvorrichtung
- 30: Grundkörper
- 32: Flansch
- 34: Verschlussrasten
- 36: Verschlussabschnitt
- 38: Basisabschnitt
- 40: Drehgelenk
- 42: Hohlraum
- 44: Hohlraum
- 46: Sockelabschnitt
- 48: Befestigungsnut
- 50: Lager
- 51: Gelenkverbindung
- 52: Kolbenstange
- 53: Anlenkvorrichtung

- A: Längsachse
- A₁: Abstand 1
- A₂: Abstand 2
- E₁: Verschlussabschnittsebene
- E₂: Vertikallängsmittelebene
- S: Schwenkachse

## Patentansprüche

1. Filterpatrone (1) zum lösbaren Einsetzen in einen Rückluft- oder Abluftkanal (2) eines Barrieresystems (3), insbesondere eines Isolators, mit sich um die Längsachse (A) erstreckenden Filtermitteln (8) zur Reinigung des axial über die Öffnung (6) von einem Bearbeitungsraum (4) des Barrieresystems (3) zugeführten Gases und, insbesondere radialen, Abgabe in den Rückluft- oder Abluftkanal (2), mit einem über den Deckel (10) durch Verschließen der Öffnung (6) verschließbaren und radial außen von den Filtermitteln (8) umgebenden Innenraum (7), und mit einer Verschlussvorrichtung (28) für die Filterpatrone (1) umfassend einen Grundkörper (30), eine Ringdichtung (11), eine von der Ringdichtung (11) umfangsseitig begrenzbare Öffnung (6) in dem Grundkörper (30), einen Deckel (10), der zwischen einer Öffnungsstellung, in welcher die Öffnung (6) geöffnet ist, und einer Schließstellung, in welcher er dichtend an der Ringdichtung (11) anliegt zum wahlweisen Öffnen und Schließen der Öffnung (6) verstellbar ist und welcher von einer gedachten Längsachse (A) durchsetzt ist, wobei der Deckel (10) mittels mindestens eines von einer Schwenkachse (S) durchgriffenen Drehgelenks (40) schwenkbar an dem Grundkörper (30) angelenkt ist,
wobei
der Deckel (10) zumindest doppeltexzentrisch schwenkbar ausgebildet ist, wobei die erste Exzentrizität dadurch ausgebildet ist, dass die Schwenkachse (S) mit einem Abstand (A₁) zu einer Verschlussabschnittsebene (E₁) angeordnet ist, in welcher ein Verschlussabschnitt (36) des Deckels (10) liegt, und wobei die zweite Exzentrizität dadurch ausgebildet ist, dass die Schwenkachse (S) mit einem Abstand (A₂) zu einer Vertikallängsmittelebene (E₂) angeordnet ist, die den Deckel (10) in dessen Schließstellung vertikal mittig durchgreift und wobei der Grundkörper (30) an seinem dem Barrieresystem (3) zuwendbaren Ende vier gleichmäßig beabstandete Verschlussrasten (34) eines Bajonettverschluss aufweist zur lösbaren Fixierung am Barrieresystem (3).

2. Filterpatrone nach Anspruch 1, wobei der Deckel (10) entlang der Schwenkachse (S) an zwei sich gegenüberliegenden Drehgelenken (40), bevorzugt an mindestens einer, weiter bevorzugt an zwei mit der Schwenkachse (S) zusammenfallenden, Wellenabschnitten (12, 13), verschwenkbar gelagert ist.

3. Filterpatrone nach einem der vorangehenden Ansprüche, wobei der Grundkörper (30) einen Flansch (32) aufweist, an welchem die Ringdichtung (11) angeordnet ist und der Flansch (32) und/oder die Ringdichtung (11) derart ausgebildet ist/sind, dass in Öffnungsstellung des Deckels (10) mindestens ein Hohlraum (42, 44) zwischen dem Flansch (32) und der Ringdichtung (11) ausgebildet ist.

4. Filterpatrone nach Anspruch 3, wobei ein Hohlraum (42, 44) dem Deckel (10) zugewandt ist und/oder ein Hohlraum (42, 44) so angeordnet ist, dass er einem an die Verschlussvorrichtung (28) anschließbaren Barrieresystem (3) zugewandt ist.

5. Filterpatrone nach einem der vorangehenden Ansprüche, wobei die Ringdichtung (11) einen weitgehend Kreisförmigen oder einen C-förmigen Querschnitt aufweist.

6. Filterpatrone nach einem der vorangehenden Ansprüche, wobei die Ringdichtung (11) zumindest abschnittsweise in Richtung Drehachse (S) konisch aufweitend ausgebildet ist.

7. Filterpatrone nach einem der vorangehenden Ansprüche, wobei der Deckel (10) mittels mindestens eines Sicherungsmittels, vorzugsweise irreversibel, in seiner Schließstellung sicherbar ist.

8. Barrieresystem, insbesondere Isolator, bevorzugt für pharmatechnische Anwendungen, mit einem Bearbeitungsraum (4) und einem Rückluft- oder Abluftkanal (2) sowie mindestens einer lösbar in den Rückluft- oder Abluftkanal (2) eingesetzten Filterpatrone nach Anspruch 1.

## Claims

1. A filter cartridge (1) for removable insertion into a return air duct or exhaust air duct (2) of a barrier system (3), in particular of an isolator, the filter cartridge (1) having filter means (8) extending around the longitudinal axis (A) for the cleaning of gas supplied in an axial direction via the opening (6) from a treatment chamber (4) of the barrier system (3) and for the, in particular radial, discharge into the return air duct or exhaust air duct (2), the filter cartridge (1) also having an interior (7) which can be closed by closing the opening (6) by means of the lid (10) and which is surrounded by the filter means (8) on the radial outside, and the filter cartridge (1) also having a closure device (28) for the filter cartridge (1), the closure device (28) comprising a main body (30), an annular seal (11), an opening (6) in the main body (30) which can be limited at the circumference by the annular seal (11), a lid (10) which can be displaced between an open position, in which the opening (6) is open, and a closed position, in which the lid (10) contacts the annular seal (11) in a sealing manner, in order to selectively open and close the opening (6) and through which an imaginary longitudinal axis (A) passes, the lid (10) being connected to the main body (30) in an articulated manner so as to be pivotable by means of at least one rotary joint (40) through which a pivot axis (S) passes,
wherein
the lid (10) is designed so as to be pivotable at least double-eccentrically, the first eccentricity resulting from the fact that the pivot axis (S) is disposed at a distance (A₁) from a closure section plane (E₁) in which a closure section (36) of the lid (10) is located, and the second eccentricity resulting from the fact that the pivot axis (S) is disposed at a distance (A₂) from a vertical longitudinal median plane (E₂) which passes vertically through the center of the lid (10) when the latter is in its closed position and the main body (30) having four closure catches (34) of a bayonet mount which are evenly spaced apart at the end which can face the barrier system (3) for removable fixation to the barrier system (3).

2. The filter cartridge according to claim 1, wherein the lid (10) is mounted so as to be pivotable along the pivot axis (S) at two opposite rotary joints (40), preferably at at least one shaft section, more preferably at two shaft sections (12, 13) coinciding with the pivot axis (S).

3. The filter cartridge according to any one of the preceding claims, wherein the main body (30) has a flange (32), the annular seal (11) being disposed at said flange (32) and the flange (32) and/or the annular seal (11) being realized in such a manner that at least one cavity (42, 44) is realized between the flange (32) and the annular seal (11) when the lid (10) is in its open position.

4. The filter cartridge according to claim 3, wherein a cavity (42, 44) faces the lid (10) and/or a cavity (42, 44) is disposed in such a manner that it faces a barrier system (3) which can be connected to the closure device (28).

5. The filter cartridge according to any one of the preceding claims, wherein the annular seal (11) has a largely circular or a C-shaped cross section.

6. The filter cartridge according to any one of the preceding claims, wherein the annular seal (11) is at least sectionwise designed so as to be conically widening in the direction of the rotary axis (S).

7. The filter cartridge according to any one of the preceding claims, wherein the lid (10) is securable by at least one securing element, preferably in an irreversible manner, in its closed position.

8. A barrier system, in particular an isolator, preferably for pharmaceutical applications, comprising a treatment chamber (4) and a return air duct or exhaust air duct (2) and at least one filter cartridge according to claim 1 inserted in a removable manner into the return air duct or exhaust air duct (2).

## Revendications

1. Cartouche de filtre (1) pour l'insertion amovible dans une conduite d'air de retour ou d'évacuation (2) d'un système de barrière (3), notamment d'un isolateur, la cartouche de filtre (1) comprenant des moyens de filtre (8) qui s'étendent autour de l'axe longitudinal (A) et qui sont destinés à nettoyer le gaz fourni axialement d'une chambre de traitement (4) du système de barrière (3) par l'ouverture (6) et qui sont destinés à évacuer le gaz, notamment de manière radiale, dans la conduite d'air de retour ou d'évacuation (2), un intérieur (7) qui peut être fermé par la fermeture de l'ouverture (6) au moyen du couvercle (10) et qui est entouré des moyens de filtre (8) à l'extérieur radial, et un dispositif de fermeture (28) pour la cartouche de filtre (1) comprenant un corps de base (30), un joint annulaire (11), une ouverture (6) dans le corps de base (30) qui peut être délimitée par le joint annulaire (11) du côté circonférentiel, un couvercle (10) qui peut être déplacé entre une position d'ouverture dans laquelle l'ouverture (6) est ouverte et une position de fermeture dans laquelle le couvercle (10) est en contact avec le joint annulaire (11) de manière étanche afin d'ouvrir et fermer l'ouverture de manière sélective et qui est traversé par un axe longitudinal (A) imaginaire, le couvercle (10) étant articulé sur le corps de base (30) de manière pivotable au moyen d'au moins un joint articulé (40) traversé par un axe de pivotement (S),
dans laquelle
le couvercle (10) peut pivoter selon au moins deux excentricités, la première excentricité étant réalisée en ce que l'axe de pivotement (S) est disposé à une distance (A₁) d'un plan de partie de fermeture (E₁) dans lequel se trouve une partie de fermeture (36) du couvercle (10), et la deuxième excentricité étant réalisée en ce que l'axe de pivotement (S) est disposé à une distance (A₂) d'un plan médian longitudinal vertical (E₂) qui traverse le couvercle (10) au centre dans la direction verticale dans la position de fermeture du couvercle (10), et le corps de base (30) ayant quatre crans de fermeture (34) d'une fermeture à baïonnette, qui sont espacés de manière uniforme et qui sont destinés à la fixation amovible au système de barrière (3), à l'extrémité du corps de base (30) qui peut être tournée vers le système de barrière (3).

2. Cartouche de filtre selon la revendication 1, dans laquelle le couvercle (10) est monté de manière pivotable le long de l'axe de pivotement (S) sur deux joints articulés (40) opposés, de préférence sur au moins une, plus préférentiellement sur deux parties d'arbre (12, 13) qui coïncident avec l'axe de pivotement (S).

3. Cartouche de filtre selon l'une quelconque des revendications précédentes, dans laquelle le corps de base (30) a une bride (32) sur laquelle le joint annulaire (11) est disposé et dans laquelle la bride (32) et/ou le joint annulaire (11) est/sont réalisé(s) de telle manière qu'au moins une cavité (42, 44) est réalisée entre la bride (32) et le joint annulaire (11) dans la position d'ouverture du couvercle (10).

4. Cartouche de filtre selon la revendication 3, dans laquelle une cavité (42, 44) est tournée vers le couvercle (10) et/ou une cavité (42, 44) est disposée de telle manière qu'elle est tournée vers un système de barrière (3) qui peut être relié au dispositif de fermeture (28).

5. Cartouche de filtre selon l'une quelconque des revendications précédentes, dans laquelle le joint annulaire (11) a une section transversale qui est largement circulaire ou qui a la forme d'un C.

6. Cartouche de filtre selon l'une quelconque des revendications précédentes, dans laquelle le joint annulaire (11) s'élargit de manière conique au moins partiellement dans la direction de l'axe de pivotement (S).

7. Cartouche de filtre selon l'une quelconque des revendications précédentes, dans laquelle le couvercle (10) peut être fixé, de préférence de manière irréversible, dans sa position de fermeture au moyen d'au moins un moyen de fixation.

8. Système de barrière, notamment un isolateur, de préférence pour des applications pharmaceutiques, comprenant une chambre de traitement (4) et une conduite d'air de retour ou d'évacuation (2) et au moins une cartouche de filtre selon la revendication 1 qui est insérée de manière amovible dans la conduite d'air de retour ou d'évacuation (2).
